(19) Europäisches Patentamt
European Patent Office
Office européen des brevets

(11) **EP 2 222 163 B1**

(12) **EUROPÄISCHE PATENTSCHRIFT**

(45) Veröffentlichungstag und Bekanntmachung des Hinweises auf die Patenterteilung:
**08.08.2012 Patentblatt 2012/32**

(21) Anmeldenummer: **08866580.7**

(22) Anmeldetag: **16.12.2008**

(51) Int Cl.:
***A01N 43/38*** *(2006.01)* ***A01N 47/06*** *(2006.01)*
***A01P 1/00*** *(2006.01)* ***A01P 3/00*** *(2006.01)*

(86) Internationale Anmeldenummer:
**PCT/EP2008/010680**

(87) Internationale Veröffentlichungsnummer:
**WO 2009/083132 (09.07.2009 Gazette 2009/28)**

(54) **VERWENDUNG VON TETRAMSÄUREDERIVATEN ZUR BEKÄMPFUNG VON SCHADERREGERN DURCH ANGIESSEN ODER TRÖPFCHENAPPLIKATION**

USE OF TETRAMIC ACID DERIVATIVES FOR CONTROLLING PESTS BY WATERING OR DROPLET APPLICATION

UTILISATION DE DÉRIVÉS D'ACIDE TÉTRAMIQUE POUR LUTTER CONTRE LES PARASITES PAR MOUILLAGE OU APPLICATION GOUTTE-À-GOUTTES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.12.2007 EP 07150293**

(43) Veröffentlichungstag der Anmeldung:
**01.09.2010 Patentblatt 2010/35**

(73) Patentinhaber: **Bayer CropScience AG**
**40789 Monheim (DE)**

(72) Erfinder:
- **FISCHER, Reiner**
  **40789 Monheim (DE)**
- **EBBINGHAUS, Dirk**
  **42119 Wuppertal (DE)**
- **KÜHNHOLD, Jürgen**
  **51467 Bergisch Gladbach (DE)**
- **THIELERT, Wolfgang**
  **51519 Odenthal (DE)**
- **HATTORI, Yumi**
  **Yuki-shi**
  **Ibaraki 307-0001 (JP)**
- **SAWADA, Haruko**
  **Yuki-shi**
  **Ibaraki 307-0007 (JP)**

(56) Entgegenhaltungen:
**WO-A-03/029213**
**WO-A-2007/126691**
**WO-A-2008/037373**
**WO-A-2008/037379**
**DE-A1- 10 239 479**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 222 163 B1

## Beschreibung

Die vorliegende Erfindung betrifft die Verwendung von Tetramsäurederivaten zur Bekämpfung von Schaderregern durch Angiessen oder Tröpfchenapplikation.

Bekannt mit insektizider und/oder akarizider Wirkung sind Tetramsäurederivate (WO 98105638) sowie deren cis-Isomeren (WO 04/007448).

Weiterhin bekannt ist die Verwendung von Tetramsäurederivaten gegen Spinnmilben und Insekten nach Angiessen, Tröpfchenapplikation oder Bodeninjektion (WO 07/126691).

Außerdem ist eine fungizide Wirkung von biphenylsubstituierten Tetramsäurederivaten nach Blattapplikation aus WO 03/059065 bekannt.

Überraschenderweise wurde nun gefunden, dass die Verbindungen der Formeln (I) oder (In

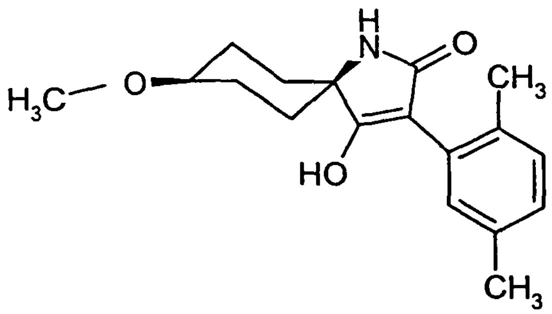

(I)

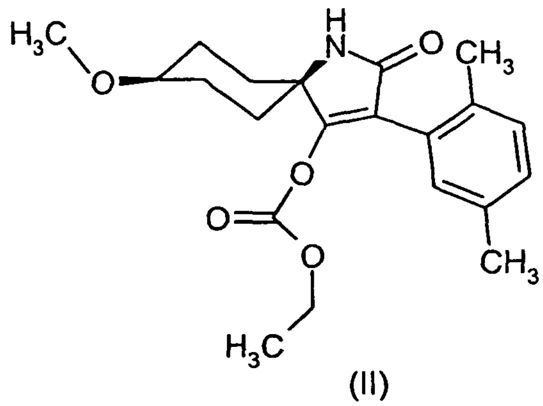

(II)

auch gut zur Bekämpfung von Schaderregern durch Angiessen auf den Boden (in Fachkreisen als "Drenching" bekannt) oder Tröpfchenapplikation auf den Boden (in Fachkreisen als "Drip application" bekannt) geeignet sind.

Hervorgehoben sind Verbindungen der Formel (I).

Ebenfalls hervorgehoben sind Verbindungen der Formel (I)).

Die vorliegende Erfindung betrifft demnach die Verwendung von Tetramsäurederivaten zur Bekämpfung von Schaderregern durch Angiessen auf den Boden oder in Bewässerungssystemen als Tröpfchenapplikation auf den Boden. Weiterhin betrifft die vorliegende Erfindung diese Anwendungsformen auf natürlichen (Erdreich) oder artifiziellen Substraten (z.B. Steinwolle, Glaswolle, Quarzsand, Kiesel, Blähton, Vermiculit) im Freiland oder in geschlossenen Systemen (z.B. Gewächshäuser oder unter Folien-Abdeckung) und in einjährigen (z.B. Gemüse, Gewürze, Zierpflanzen) Kulturen.

Die nur allgemein beschriebenen zu schützenden Kulturen sind im Folgenden differenziert und näher spezifiziert. So versteht man hinsichtlich der Anwendung unter Gemüse z.B. Fruchtgemüse und Blütenstände als Gemüse, beispielsweise Paprika, Peperoni, Tomaten, Auberginen, Gurken, Kürbisse, Zucchini, Ackerbohnen, Stangenbohnen, Buschbohnen, Erbsen, Artischocken, Mais;

aber auch Blattgemüse, beispielsweise Kopfsalat, Chicoreé, Endivien, Kressen, Rauken, Feldsalat, Eisbergsalat, Lauch, Spinat, Mangold;

weiterhin Knollen-, Wurzel- und Stengelgemüse, beispielsweise Sellerie, Rote Beete, Möhren, Radieschen, Meerrettich, Schwarzwurzeln, Spargel, Speiserüben, Palmsprossen, Bambussprossen, außerdem Zwiebelgemüse, beispielsweise Zwiebeln, Lauch, Fenchel, Knoblauch;

ferner Kohlgemüse, wie Blumenkohl, Broccoli, Kohlrabi, Rotkohl, Weißkohl, Grünkohl, Wirsing, Rosenkohl, Chinakohl.

Hinsichtlich der Anwendung versteht man unter Zierpflanzen ein- und mehrjährige Pflanzen, z.B. Schnittblumen wie beispielsweise Rosen, Nelken, Gerbera, Lilien, Margeriten, Chrysanthemen, Tulpen, Narzissen, Anemonen, Mohn, Amyrillis, Dahlien, Azaleen, Malven,

aber auch z.B. Beetpflanzen, Topfpflanzen und Stauden, wie beispielsweise Rosen, Tagetes, Stiefmütterchen, Geranien, Fuchsien, Hibiscus, Chrysanthemen, Fleißige Lieschen, Alpenveilchen, Ursambaraveilchen, Sonnenblumen, Begonien,

Hinsichtlich der Anwendung versteht man unter Gewürzen ein- und mehrjährige Pflanzen wie beispielsweise Anis, Chilli, Paprika, Pfeffer, Vanille, Majoran, Thymian, Gewürznelken, Wacholderbeeren, Zimt, Estragon, Koryander, Safran, Ingwer.

Fungizide lassen sich im Pflanzenschutz zur Bekämpfung von Plasmodiophoromycetes, Oomycetes, Chytridiomycetes, Zygomycetes, Ascomycetes, Basidiomycetes und Deuteromycetes einsetzen.

Bakterizide lassen sich im Pflanzenschutz zur Bekämpfung von Pseudomonadaceae, Rhizobiaceae, Enterobacteriaceae, Corynebacteriaceae und Streptomycetaceae einsetzen.

Beispielhaft aber nicht begrenzend seien einige Erreger von pilzlichen und bakteriellen Erkrankungen, die unter die oben aufgezählten Oberbegriffe fallen, genannt:

Fungizide lassen sich im Pflanzenschutz zur Bekämpfung von Plasmodiophoromycetes, Oomycetes, Chytridiomycetes, Zygomycetes, Ascomycetes, Basidiomycetes und Deuteromycetes einsetzen.

Bakterizide lassen sich im Pflanzenschutz zur Bekämpfung von Pseudomonadaceae, Rhizobiaceae, Enterobacteriaceae, Corynebacteriaceae und Streptomycetaceae einsetzen.

Beispielhaft aber nicht begrenzend seien einige Erreger von pilzlichen und bakteriellen Erkrankungen, die unter die oben aufgezählten Oberbegriffe fallen, genannt:

Erkrankungen, hervorgerufen durch Erreger des Echten Mehltaus wie z.B.

Blumeria-Arten, wie beispielsweise Blumeria graminis;

Leveillula-Arten wie beispielsweise Leveillula taurica;

Oidium-Arten wie beispielsweise Oidium lycopersicum;

Podosphaera-Arten, wie beispielsweise Podosphaera leucotricha;

Sphaerotheca-Arten, wie beispielsweise Sphaerotheca fuliginea;

Uncinula-Arten, wie beispielsweise Uncinula necator;

Erkrankungen, hervorgerufen durch Erreger von Rostkrankheiten wie z.B.

Gymnosporangium-Arten, wie beispielsweise Gymnosporangium sabinae:

Hemileia-Arten, wie beispielsweise Hemileia vastatrix;

Phakopsora-Arten, wie beispielsweise Phakopsora pachyrhizi und Phakopsora meibomiae;

Puccinia-Arten, wie beispielsweise Puccinia recondita;

Uromyces-Arten, wie beispielsweise Uromyces appendiculatus;

Erkrankungen, hervorgerufen durch Erreger der Gruppe der Oomyceten wie z.B.

Bremia-Arten, wie beispielsweise Bremia lactucae;

Peronospora-Arten, wie beispielsweise Peronospora pisi oder P. brassicae;

Phytophthora-Arten, wie beispielsweise Phytophthora infestans;

Plasmopara-Arten, wie beispielsweise Plasmopara viticola;

Pseudoperonospora-Arten, wie beispielsweise Pseudoperonospora humuli oder

Pseudoperonospora cubensis;

Pythium-Arten, wie beispielsweise Pythium ultimum;

Blattfleckenkrankheiten und Blattwelken, hervorgerufen durch z.B.

Alternaria-Arten, wie beispielsweise Alternaria solani;

Cercospora-Arten, wie beispielsweise Cercospora beticola;

Cladosporium-Arten, wie beispielsweise Cladosporium cucumerinum;

Cochliobolus-Arten, wie beispielsweise Cochliobolus sativus

(Konidienform: Drechslera, Syn: Helminthosporium);

Colletotrichum-Arten, wie beispielsweise Colletotrichum lindemuthanium;

Cycloconium-Arten, wie beispielsweise Cycloconium oleaginum;

Diaporthe-Arten, wie beispielsweise Diaporthe citri;

Elsinoe-Arten, wie beispielsweise Elsinoe fawcettii;

Gloeosporium-Arten, wie beispielsweise Gloeosporium laeticolor;

Glomerella-Arten, wie beispielsweise Glomerella cingulata;

Guignardia-Arten, wie beispielsweise Guignardia bidwelli;

Leptosphaeria-Arten, wie beispielsweise Leptosphaeria maculans;

Magnaporthe-Arten, wie beispielsweise Magnaporthe grisea;

Mycosphaerella-Arten, wie beispielsweise Mycosphaerella graminicola und Mycosphaerella fijiensis;

Phaeosphaeria-Arten, wie beispielsweise Phaeosphaeria nodorum;

Pyrenophora-Arten, wie beispielsweise Pyrenophora teres;

Ramularia-Arten, wie beispielsweise Ramularia collo-cygni;

Rhynchosporium-Arten, wie beispielsweise Rhynchosporium secalis;

Septoria-Arten, wie beispielsweise Septoria apii;

Typhula-Arten, wie beispielsweise Typhula incarnata;

Venturia-Arten, wie beispielsweise Venturia inaequalis;

Wurzel- und Stengelkrankheiten, hervorgerufen durch z.B.

Corticium-Arten, wie beispielsweise Corticium graminearum;

Fusarium-Arten, wie beispielsweise Fusarium oxysporum;

Gaeumannomyces-Arten, wie beispielsweise Gaeumannomyces graminis;

Rhizoctonia-Arten, wie beispielsweise Rhizoctonia solani;

Tapesia-Arten, wie beispielsweise Tapesia acuformis;

Thielaviopsis-Arten, wie beispielsweise Thielaviopsis basicola;

Ähren- und Rispenerkrankungen (inklusive Maiskolben), hervorgerufen durch z.B.

Alternaria-Arten, wie beispielsweise Alternaria spp.;

Aspergillus-Arten, wie beispielsweise Aspergillus flavus;

Cladosporium-Arten, wie beispielsweise Cladosporium cladosporioides;

Claviceps-Arten, wie beispielsweise Claviceps purpurea;

Fusarium-Arten, wie beispielsweise Fusarium culmorum;

Gibberella-Arten, wie beispielsweise Gibberella zeae;

Monographella-Arten, wie beispielsweise Monographella nivalis;

Erkrankungen, hervorgerufen durch Brandpilze wie z.B.

Sphacelotheca-Arten, wie beispielsweise Sphacelotheca reiliana;

Tilletia-Arten, wie beispielsweise Tilletia caries;

Urocystis-Arten, wie beispielsweise Urocystis occulta;

Ustilago-Arten, wie beispielsweise Ustilago nuda;

Fruchtfäule hervorgerufen durch z.B.

Aspergillus-Arten, wie beispielsweise Aspergillus flavus;

Botrytis-Arten, wie beispielsweise Botrytis cinerea;

Penicillium-Arten, wie beispielsweise Penicillium expansum und Penicillium purpurogenum;

Sclerotinia-Arten, wie beispielsweise Sclerotinia sclerotiorum;

Verticilium-Arten, wie beispielsweise Verticilium alboatrum;

Samen- und bodenbürtige Fäulen und Welken, sowie Sämlingserkrankungen, hervorgerufen durch z.B.

Alternaria-Arten, wie beispielsweise Alternaria brassicicola;

Aphanomyces-Arten, wie beispielsweise Aphanomyces euteiches;

Ascochyta-Arten, wie beispielsweise Ascochyta lentis;

Aspergillus-Arten, wie beispielsweise Aspergillus flavus;

Cladosporium-Arten, wie beispielsweise Cladosporium herbarum;

Cochliobolus-Arten, wie beispielsweise Cochliobolus sativus;

(Konidienform: Drechslera, Bipolaris Syn: Helminthosporium);

Colletotrichum-Arten, wie beispielsweise Colletotrichum coccodes;

Fusarium-Arten, wie beispielsweise Fusarium culmorum;

Gibberella-Arten, wie beispielsweise Gibberella zeae;

Macrophomina-Arten, wie beispielsweise Macrophomina phaseolina;

Monographella-Arten, wie beispielsweise Monographella nivalis;

Penicillium-Arten, wie beispielsweise Penicillium expansum;

Phoma-Arten, wie beispielsweise Phoma lingam;

Phomopsis-Arten, wie beispielsweise Phomopsis sojae;

Phytophthora Arten, wie beispielsweise Phytophthora cactorum;

Pyrenophora-Arten, wie beispielsweise Pyrenophora graminea;

Pyricularia-Arten, wie beispielsweise Pyricularia oryzae;

Pythium-Arten, wie beispielsweise Pythium ultimum;

Rhizoctonia-Arten, wie beispielsweise Rhizoctonia solani;

Rhizopus-Arten, wie beispielsweise Rhizopus oryzae

Sclerotium-Arten, wie beispielsweise Sclerotium rolfsii;

Septoria-Arten, wie beispielsweise Septoria nodorum;

Typhula-Arten, wie beispielsweise Typhula incarnata;

Verticillium-Arten, wie beispielsweise Verticillium dahliae

Krebserkrankungen, Gallen und Hexenbesen, hervorgerufen durch z.B.

Nectria-Arten, wie beispielsweise Nectria galligena;

Welkeerkrankungen hervorgerufen durch z.B.

Monilinia-Arten, wie beispielsweise Monilinia laxa;

Deformationen von Blättern, Blüten und Früchten, hervorgerufen durch z.B.

Taphrina-Arten, wie beispielsweise Taphrina deformans;

Degenerationserkrankungen holziger Pflanzen, hervorgerufen durch z.B.

Esca-Arten, wie beispielsweise Phaeomoniella chlamydospora und Phaeoacremonium aleophilum und Fomitiporia mediterranea;

Blüten- und Samenerkrankungen, hervorgerufen durch z.B.

Botrytis-Arten, wie beispielsweise Botrytis cinerea;

Erkrankungen von Pflanzenknollen, hervorgerufen durch z.B.

Rhizoctonia-Arten, wie beispielsweise Rhizoctonia solani;

Helminthosporium-Arten, wie beispielsweise Helminthosporium solani;

Erkrankungen, hervorgerufen durch bakterielle Erreger wie z.B.

Xanthomonas-Arten, wie beispielsweise Xanthomonas campestris pv. oryzae;

Pseudomonas-Arten, wie beispielsweise Pseudomonas syringae pv. lachrymans;

Erwinia-Arten, wie beispielsweise Erwinia amylovora.

Hervorgehoben ist die Bekämpfung von Erregern des Echten Mehltaus.

Hervorgehoben ist auch die Bekämpfung von Erregern von Rostkrankheiten.

Die Erfindung wird durch die folgenden Beispiele veranschaulicht.

**Beispiel 1**

8 je 2,25 $m^2$ große Parzellen mit Paprikapflanzen der Sorte "Shishitou aoi" werden in zwei Replikationen mit 50 ml einer Wirkstofflösung, enthaltend den Wirkstoff (II) (Formulierung: 240 SC) in der angegebenen Aufwandmenge angegossen. Nach einer starken natürlichen Infektion mit Leveillula taurica erfolgt die Auswertung nach 21 Tage nach der Behandlung, indem man die Wirksamkeit mit Hilfe der Abbott-Formel* ermittelt.

Tabelle A

| Wirkstoff (II) | |
|---|---|
| Aufwandmenge (mg Wirkstoff / Pflanze) | Wirkung (% Abbott) gegen Leveillula taurica |
| | 21 d |
| 40 | 87,4 |
| 60 | 100 |
| 80 | 100 |

**Beispiel 2**

Je drei Tomatenpflanzen der Sorte "Hoffmanns Rendita" auf Steinwolle werden in zwei Replikationen eine Woche nach dem Verpflanzen mit je 100 ml Wirkstofflösung enthaltend den Wirkstoff (II) (Formulierung: 240 SC) in der angegebenen Aufwandmenge angegossen. Die Gewächshaustemperatur beträgt tagsüber 20 °C und nachts 17°C. Eine Infektion mit dem echten Mehltau Oidium lycopersicum erfolgt jeweils zwei und sieben Tage nach der Wirkstoffapplikation. Die Auswertung erfolgt jeweils 14, 23, 28, 35 Tage nach der jeweiligen Infektion, indem man die Wirksamkeit mit Hilfe der Abbott-Formel* auf den alten Blättern und dem Neuzuwachs ermittelt.

Tabelle B

| Wirkstoff (II) | | | | |
|---|---|---|---|---|
| Aufwandmenge (mg Wirkstoff / Pflanze) | Wirkung (% Abbott) gegen Oidium lycopersicum | | | |
| | 14 d | 23 d | 28 d alte Blätter | 28 d Neuzuwachs |
| 40<br>2 d vor Infektion | 33 | 40 | 41 | 65 |
| 40<br>7 d vor Infektion | 45 | 45 | 45 | 77 |

Wirksamkeitsberechnung nach Abbott:

$$\text{Wirksamkeit (\%)} = \frac{(X\text{-}Y)}{X \times 100}$$

wobei X = Wert der Kontrolle und Y = Wert des Prüfglieds

**Patentansprüche**

1. Verwendung der Verbindungen der Formeln (I) oder (II)

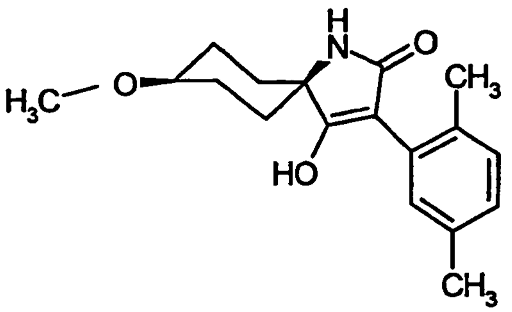

(I)

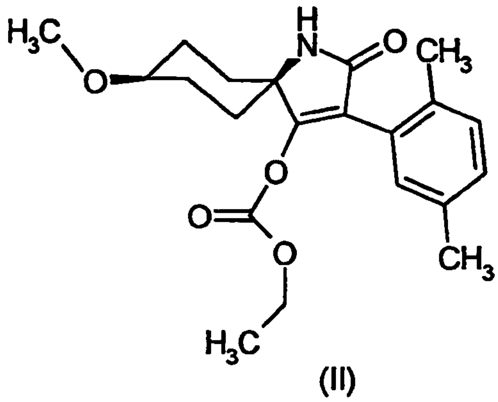

(II)

zur Bekämpfung von Schaderregern auf den Blättern durch Angiessen auf den Boden oder Tröpfchenapplikation auf den Boden

2. Verwendung gemäß Anspruch 1, wobei die zu behandelnde Pflanze in einem artifiziellen Wachstumssubstrat angezogen wird.

3. Verwendung gemäß Anspruch 2, wobei das artifizielle Wachstumssubstrat ausgewählt ist aus der Gruppe bestehend aus Steinwolle, Glaswolle, Quarzsand, Kiesel, Blähton und Vermiculit.

4. Verwendung gemäß einem oder mehreren der Ansprüche 1 bis 3, wobei die zu behandelnde Pflanze in einem geschlossenen System gepflanzt ist

5. Verwendung gemäß einem oder mehreren der Ansprüche 1 bis 4, wobei die zu behandelnde Pflanze ausgewählt ist aus der Gruppe bestehend aus Gemüsen, Gewürzen, Zierpflanzen.

6. Verwendung gemäß einem oder mehreren der Ansprüche 1 bis 4, wobei die zu behandelnde Pflanze ausgewählt ist aus der Gruppe bestehend aus Gemüsen.

7. Verwendung gemäß einem oder mehreren der Ansprüche 1 bis 6, wobei die Applikation des Wirkstoffs durch Angiessen auf den Boden geschieht

8. Verwendung gemäß einem oder mehreren der Ansprüche 1 bis 6, wobei die Applikation des Wirkstoffes durch Tröpfchenapplikation geschieht

9. Verwendung gemäß einem oder mehreren der Ansprüche 1 bis 8 zur Bekämpfung von Schaderregern pilzlicher und bakterieller Erkrankungen.

10. Verwendung gemäß einem oder mehreren der Ansprüche 1 bis 9 zur Bekämpfung von Erregern des Echten Mehltaus.

11. Verwendung gemäß einem oder mehreren der Ansprüche 1 bis 10 zur Bekämpfung von Leveillula-Arten.

12. Verwendung gemäß einem oder mehreren der Ansprüche 1 bis 10 zur Bekämpfung von Oidium-Arten.

## Claims

1. Use of compounds of the formulae (I) and (II)

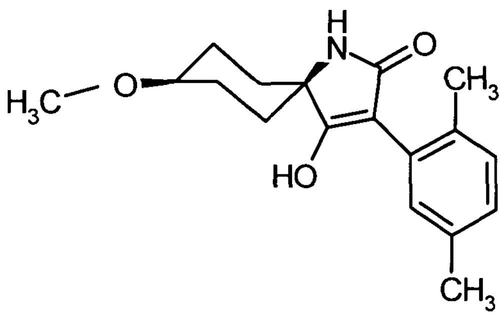

(I)

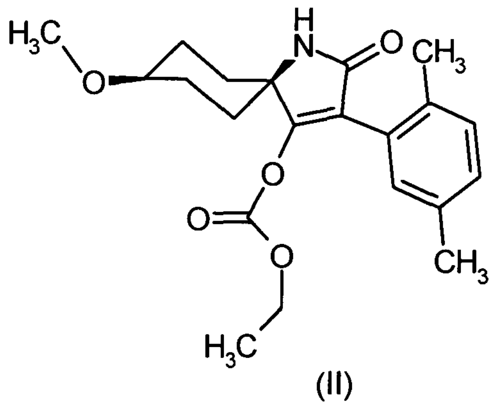

(II)

for controlling pathogens on the leaves by drenching or drip application.

2. Use according to Claim 1, where the plant to be treated is grown in an artificial growth substrate.

3. Use according to Claim 2, where the artificial growth substrate is selected from the group consisting of rock wool, glass wool, quartz sand, gravel, expanded clay and vermiculite.

4. Use according to one or more of Claims 1 to 3, where the plant to be treated is planted in a closed system.

5. Use according to one or more of Claims 1 to 4, where the plant to be treated is selected from the group consisting of vegetables, spices and ornamental plants.

6. Use according to one or more of Claims 1 to 4, where the plant to be treated is selected from the group consisting of vegetables.

7. Use according to one or more of Claims 1 to 6, where the application of the active compound is by drenching.

8. Use according to one or more of Claims 1 to 6, where the application of the active compound is by drip application.

9. Use according to one or more of Claims 1 to 8 for controlling pathogens of fungal and bacterial diseases.

10. Use according to one or more of Claims 1 to 9 for controlling powdery mildew pathogens.

11. Use according to one or more of Claims 1 to 10 for controlling Leveillula species.

12. Use according to one or more of Claims 1 to 10 for controlling Oidium species.

## Revendications

1. Utilisation des composés de formules (I) ou (II)

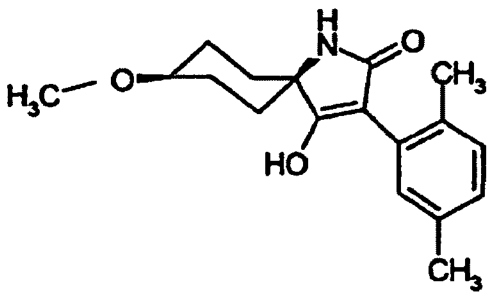

(I)

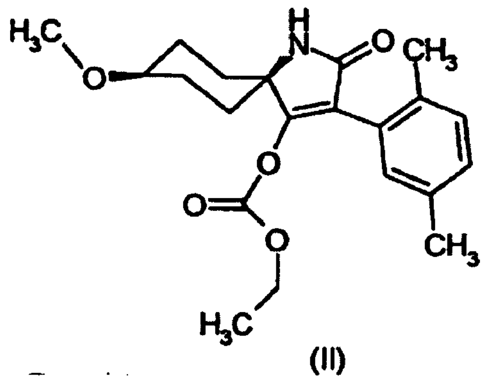

(II)

pour la lutte contre des agents pathogènes sur les feuilles, par arrosage sur le sol ou application goutte à goutte sur le sol.

**2.** Utilisation selon la revendication 1, dans laquelle la plante à traiter est cultivée dans un substrat de croissance artificiel.

**3.** Utilisation selon la revendication 2, dans laquelle le substrat de croissance artificiel est choisi dans le groupe constitué par la laine de roche, la laine de verre, le sable quartzeux, la silice, l'argile expansée et la vermiculite.

**4.** Utilisation selon une ou plusieurs des revendications 1 à 3, dans laquelle la plante à traiter est plantée dans un système clos.

**5.** Utilisation selon une ou plusieurs des revendications 1 à 4, dans laquelle la plante à traiter est choisie dans le groupe constitué par les légumes, les plantes aromatiques, les plantes ornementales.

**6.** Utilisation selon une ou plusieurs des revendications 1 à 4, dans laquelle la plante à traiter est choisie dans le groupe constitué par les légumes.

**7.** Utilisation selon une ou plusieurs des revendications 1 à 6, dans laquelle l'application de la substance active s'effectue par arrosage sur le sol.

**8.** Utilisation selon une ou plusieurs des revendications 1 à 6, dans laquelle l'application de la substance active s'effectue par application goutte à goutte.

**9.** Utilisation selon une ou plusieurs des revendications 1 à 8, pour la lutte contre des agents pathogènes causant des maladies fongiques et bactériennes.

**10.** Utilisation selon une ou plusieurs des revendications 1 à 9, pour la lutte contre les agents pathogènes de l'oïdium.

**11.** Utilisation selon une ou plusieurs des revendications 1 à 10, pour la lutte contre des espèces de Leveillula.

**12.** Utilisation selon une ou plusieurs des revendications 1 à 10, pour la lutte contre des espèces d'oïdium.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 98105638 A
- WO 04007448 A
- WO 07126691 A
- WO 03059065 A